# EUROPÄISCHE PATENTSCHRIFT

(11) **EP 1 655 233 B1**
(45) Veröffentlichungstag und Bekanntmachung des Hinweises auf die Patenterteilung: **25.07.2007**
(21) Anmeldenummer: 05023223.0
(22) Anmeldetag: 25.10.2005
(51) Int. Cl.: B65D 33/38

(54) **Kunststoff-Ausgiess-Einschweissteil**
Plastic spout to be sealed to a pouch
Bec en matière plastique à être soudé dans un sac

(30) Priorität: 04.11.2004 DE 102004053857; 14.02.2005 DE 102005006871
(43) Veröffentlichungstag der Anmeldung: 10.05.2006
(73) Patentinhaber: Georg Menshen GmbH + Co. KG, D-57413 Finnentrop (DE)
(72) Erfinder: Hildebrand, Detlef, 58840 Plettenberg (DE); Schulte, Walter, 57413 Finnentrop (DE)
(74) Vertreter: COHAUSZ DAWIDOWICZ HANNIG & SOZIEN

(56) Entgegenhaltungen:
- EP-A- 1 284 223
- WO-A-02/087991
- DE-U1- 29 801 270
- US-B1- 6 273 307

## Beschreibung

Die Erfindung betrifft ein Kunststoff-Ausgieß-Einschweißteil zum Verbinden mit einem Kunststoff-Behälterteil, insbesondere einem Behälterteil aus folienartigem Kunststoffmaterial, mit umfänglich eines eine Ausgießpassage definierenden Halsbereichs sich erstreckenden zueinander parallelen Anschweißrippen, an deren äußeren Umfang ein rippenförmiger Schweißgrat mit Schweißkante mit einer geringeren Dicke als die des Rippenbasisbereichs vorgesehen ist, wobei der Schweißgrat an einem äußeren abgerundeten Umfangsrand des Rippenbasisbereichs angeformt ist und senkrecht zu den Anschweißrippen eine Trennwand angeordnet ist, die zu beiden Seiten des Halsbereichs radial vorsteht.

Ein solches Einschweißteil ist aus der EP 0 773 893 B1 bekannt. Bei dieser bekannten Ausführung enden die rippenförmigen Schweißgrate an den äußeren Enden der Anschweißrippen. Die Enden der Anschweißrippen und der Schweißgrate bilden damit eine übergangslose Stelle, an der es Schwierigkeiten bereitet, die Beutelfolie dicht anzuschweißen. Um dies zu beheben ist es darüber hinaus bekannt, an den äußeren Enden der Anschweißrippen jeweils eine Fahne anzuformen, die eine Trennwand verlängert, die die Anschweißrippen auf Abstand hält. Diese Fahnen zu beiden Enden der Anschweißrippen stellen zwar eine Verbesserung dar aber es bedarf immer noch einer verhältnismäßig langen Schweißzeit bei hoher Temperatur, um eine sichere Abdichtung zu erhalten. Dies führte aber dazu, dass aufgrund der hohen Temperatur und der Schweißzeit die Folie des Beutels leicht deformiert wird.

Aufgabe der Erfindung ist es, ein Kunststoff-Ausgieß-Einschweißteil der eingangs genannten Art so zu verbessem, dass bei hoher Dichtheit eine geringere Temperatur und Schweißzeit erforderlich ist und das Kunststoff-Behälterteil nach dem Einschweißen nicht deformiert ist.

Diese Aufgabe wird erfindungsgemäß dadurch gelöst, dass beide Enden der Trennwand über die Enden des Rippenbasisbereichs hinaus zu seitlichen Fahnen verlängert sind, wobei die Schweißgrate verlängert über beide Seiten der Fahnen verlaufen und wobei die seitlichen Fahnen statt einer oberen und untern äußeren Ecke jeweils eine Ausnehmung aufweisen. Hierdurch kommt es zu einem schnelleren und sicheren Verschweißen bei geringeren Temperaturen und höherer Dichtsicherheit. Auch braucht in der Regel nur noch ein einziges Mal geschweißt werden, statt wie bisher zwei- bis viermaliges Schweißen, Die obere und untere Ausnehmung an jeder Fahne verhindert, dass beim Verschweißen Material der Fahne ins Beutelinnere bzw, zwischen den Folien unnötig abgegeben wird und damit ein weicher Auslauf zum Beutel hin sichergestellt ist.

Bei einem Kunststoff-Ausgieß-Einschweißteil zum Verbinden mit einem Kunststoff-Behäfterteil, insbesondere einem Behälterteil aus folienartigem Kunststoffmaterial wie einem Beutel, mit umfänglich eines eine Ausgießpassage definierenden Halsbereichs (Stutzen) sich erstreckenden zueinander parallelen flächenförmigen Anschweißrippen, an deren äußeren Umfang ein rippenförmiger Schweißgrat mit einer geringeren Dicke als die der Anschweißrippen vorgesehen ist, wobei der Schweißgrat an einem äußeren abgerundeten Umfangsrand der Anschweißrippen angeformt ist, und senkrecht zu den Anschweißrippen eine Trennwand angeordnet ist, die zu beiden Seiten des Halsbereichs radial vorsteht wird vorgeschlagen, dass beide Enden der Trennwand über die Enden des Rippenbasisbereichs hinaus zu seitlichen Fahnen verlängert sind, wobei die Schweißgrate verlängert über beide Seiten der Fahnen verlaufen und wobei die seitlichen Fahnen statt einer oberen und untern äußeren Ecke jeweils eine Ausnehmung aufweisen. Auch hier verhindert die obere und untere Ausnehmung an jeder Fahne, dass beim Verschweißen Material der Fahne ins Beutelinnere bzw. zwischen den Folien unnötig abgegeben wird und damit ein weicher Auslauf zum Beutel hin sichergestellt ist.

Eine besonders sichere und kontinuierlich verlaufende Schweißverbindung wird erreicht, wenn der Schweißgrat am äußeren Ende der Rippenbasisbereiche bogenförmig knickfrei zur Fahne hin verläuft. Dies wird auch dadurch verbessert, wenn der Schweißgrat auf der Fahne in seiner Höhe sich verringernd ausläuft.

Eine sichere und kontinuierliche Verschweißung wird auch dann erreicht, wenn der Schweißgrat in seiner Höhe vom Ende der Rippenbasisbereiche zur Mitte der Rippenbasisbereiche hin abnimmt. Hierzu wird auch vorgeschlagen, dass der Schweißgrat im mittleren Bereich des Einschweißteils die Höhe Null hat.

Ein optimales Verschweißen wird auch dann erreicht, wenn mindestens vier Rippenbasisbereiche angeordnet sind und nur die mittleren Rippenbasisbereiche Schweißgrate aufweisen. Hierzu ist auch von Vorteil, wenn die Fahnen nur im Bereich derjenigen Rippenbasisbereiche vorstehen, die Schweißgrate besitzen.

Eine sichere Befestigung bei hoher Dichtigkeit wird erreicht, wenn die Höhe der seitlichen Fahnen geringer ist, als die Höhe der Flächen, Auch sollten die Fahnen mittig der Flächen angeordnet sein.

Vorzugsweise wird vorgeschlagen, dass über die Fahnen ein bis drei Schweißgrate verlaufen. Ferner können die Schweißgrate einen gewölbten. spitzen, trapezförmigen oder rechteckigen Querschnitt aufweisen.

Um ein Ausweichen der Seitenwände beim Verschweißen auszugleichen wird vorgeschlagen, dass weiter unten liegende Schweißgrate einen größeren Querschnitt und/oder Höhe aufweisen als darüber angeordnete Schweißgrate. Alternativ oder zusätzlich wird hierfür vorgeschlagen, dass es in seinem insbesondere durch die Halsbereich- bzw. Stutzenachse verlaufenden Querschnitt nach unten hin in seiner Breite zunimmt. Hierzu können die Flächen nach unten hin nach außen ausgestellt sein,

Um die Wände des Behälters insbesondere Beutels sicher anzuheften wird vorgeschlagen, dass die Flächen in ihrem oberen Bereich zur Halsbereich- bzw. Stutzenachse parallele Schweißgrate aufweisen.

Ein Ausführungsbeispiel der Erfindung ist der Zeichnung perspektivisch dargestellt und wird im folgenden näher beschrieben. Es zeigen
- Fig.-1: eine perspektivische Ansicht einer ersten Ausführung,
- Fig. 2: eine erste Seitenansicht einer zweiten Ausführung,
- Fig. 3: einen vergrößerten Ausschnitt aus Fig. 2,
- Fig. 4: eine zweite Seitenansicht der zweiten Ausführung, und
- Fig. 5: einen senkrechten axialen Querschnitt durch die zweite Ausführung.

Ein schiffchenförmiges Kunststoff-Ausgieß-Einschweißteil 1 ist aus einem formstabilen Kunststoff einstückig geformt und besitzt im ersten Ausführungsbeispiel vier zueinander parallele, im wesentlichen rautenförmige Böden, die miteinander gleiche Abstände bilden und im folgenden "Anschweißrippen 2" genannt werden. Jede dieser ebenen Anschweißrippen 2 besteht aus einem Rippenbasisbereich, an dessen äußerem Rand jeweils Schweißgrate 3 angeformt sind. Diese Schweißgrate 3 stehen somit an den abgerundeten stimförmigen Seiten der Rippenbasisbereiche vor und besitzen eine geringere Dicke als diese. Die rippenförmigen Schweißgrate 3 verlaufen aber nicht über die gesamte Länge der Seitenränder bzw. Umfangsränder 4 der Anschweißrippen 2, sondem im mittleren Bereich, an denen eine mittlere Durchgangsöffnung durch alle Anschweißrippen 2 verläuft, ist der Seitenrand und damit der Außenrand der Anschweißrippen abgerundet und frei von einem Schweißgrat.

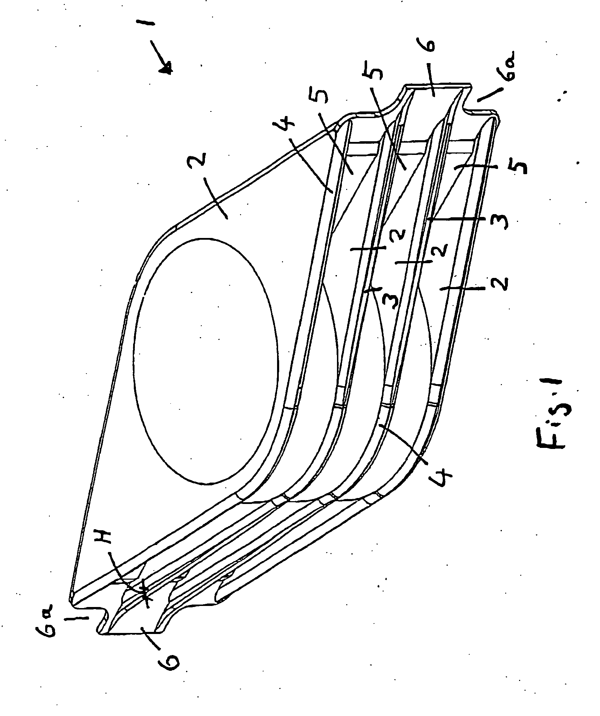

Die mittlere Durchgangsöffnung des Einschweißteils 1 hat die Aufgabe, den Halsbereich bzw. Stutzen 8 einer in Fig. 1 nicht dargestellten Ausgießpassage eines Kunststoffausgießers aufzunehmen.

Die Anschweißrippen 2 sind zueinander durch eine Trennwand 5 gehalten, die die Öffnung diametral durchlaufen würde, wenn nicht die Öffnung freigehalten wäre. Die Trennwand 5 liegt damit auf einem Radius der Öffnung. Hierbei endet die Trennwand 5 im Bereich der obersten und untersten Anschweißrippen mit deren äußerem Ende. Im Bereich der zwei mittleren Anschweißrippen ist an die Trennwand 5 zu beiden Seiten jeweils eine Fahne 6 in der gleichen Ebene angeformt, die damit das Einschweißteil 1 zu beiden Seiten verlängert.

Die rippenförmigen Schweißgrate 3 der beiden mittleren Anschweißrippen 2 sind auch verlängert und verlaufen über beide Seiten der Fahnen 6, um dort dann an deren Ende auch auszulaufen.

Im Bereich der Anschlussstelle der Fahne 6 an der Trennwand 5 varläuft der Schweißgrat 3 bogenförmig, das heißt, er bildet dort keinen Knick, sondem füllt vielmehr den Knick zwischen dem Seitenrand 4 der Anschweißrippe 2 und der Fahne 6 abgerundet aus.

Die Höhe H der Schweißgrate 3 verändert sich über seinen Verlauf, wobei die Höhe in Richtung parallel zu den Oberflächen der Anschweißrippen 2 gesehen wird. Von den äußeren Enden der Rippenbasisbereiche 2 zu ihrer Mitte hin nimmt die Höhe ab und im mittleren Bereich des Rippenbasisbereichs besteht kein Schweißgrat auf dem Seitenrand 4, vielmehr hat sich die Höhe bis dahin auf Null verringert.

Die beiden Fahnen 6 sind nur im Bereich der zwei mittleren Anschweißrippen 2 angeordnet. Im Bereich der oberen und unteren Anschweißrippe bestehen Ausnehmungen 6a.

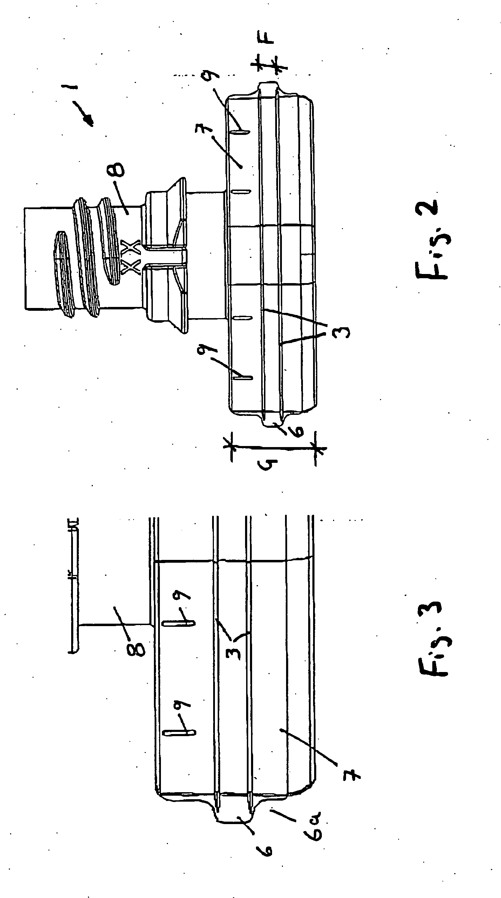

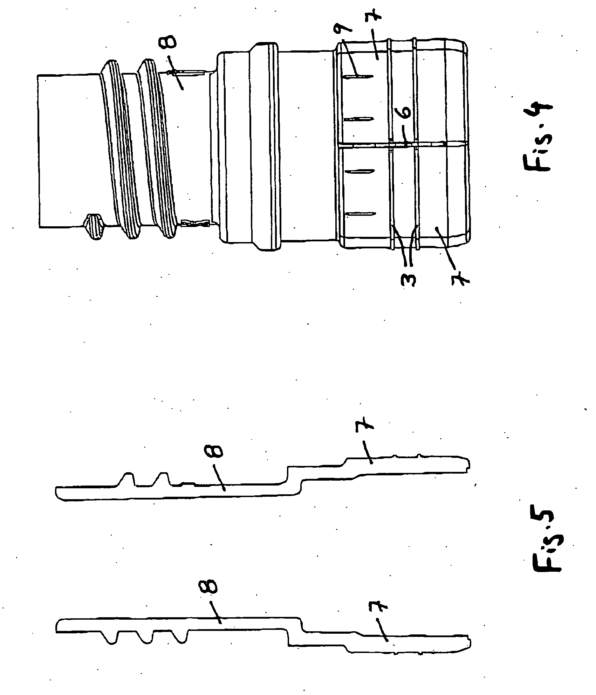

Bei dem in den Fig. 2 bis 5 gezeigten zweiten Ausführungspeispiel weist das schiffchenförmige Einschweißteil statt der Anschweißrippen 2 oder auch zusätzlich zu diesen, äußere Wände bzw. Flächen 7 auf, die die Seitenwände der Schiffchenform bilden und im wesentlichen senkrecht gestellt sind. In diesem Ausführungsbeispiel ist auch der die Ausgießpassage und Ausgießöffnung bildende Halsbereich bzw. Stutzen 8 dargestellt, auf dessen Außengewinde eine Verschlusskappe mit ihrem Innengewinde aufschraubbar ist.

Die zwei außen konvex gekrümmten Flächen 7 schließen damit die Ausgießpassage ein und sind an ihren beiden seitlichen Enden aneinander befestigt bzw. einstückig aneinander aus Kunststoff geformt. An beiden Enden der Flächen 7 sind Erweiterungen in Form von Fahnen 6 angeformt, deren Höhe nur ein Viertel bis ein Drittel der Höhe der Flächen 7 beträgt, so dass auch hier bei der ersten Ausführung freibleibende Ausnehmungen 6a über und unter jeder Fahne 6 bestehen.

Auf beiden Seitenflächen 7 verlaufen Schweißgrate 3 über die gesamte Länge der Flächen und parallel zur Flächenober- und unterkante. Hierbei verlaufen die rippenförmigen Schweißgrate 3 über beide Enden der Flächen 7 hinaus weiter auf den Fahnen 6, um dort, wie schon bei der ersten Ausführungsform, in der Höhe sich verringemd auszulaufen.

Die Fahnen 6 sind somit mittig der Flächen 7 angeordnet und über die Fahnen verlaufen im Ausführungsbeispiel zwei Schweißgrate 3. Stattdessen können aber auch ein oder drei Schweißgrate zueinander parallel angeordnet sein. Der Querschnitt der Schweißgrate kann halbkreisförmig, spitz, trapezförmig oder rechteckig sein.

Um die Wände des Behälters insbesondere die Folienwände eines Beutels auf dem schiffchenförmigen Bereich des Einschweißtgils sicher befestigen zu können und hierbei zu berücksichtigen, dass beim Aufdrücken der Behälterwände auf das Einschweißteil die Wände nachgeben, ist es von Vorteil, wenn weiter unten liegende Schweißgrate einen größeren Querschnitt und/oder Höhe H aufweisen, als darüber angeordnete Schweißgrate, so dass die unteren Schweißgrate bzw. der untere Schweißgrat der Beutelwandung sozusagen entgegenkommt und ein Ausweichen bzw. Eindrücken ausgleicht. Zusätzlich oder stattdessen können hierzu aber auch die Wände 7 nach unten hin nach außen ausgestellt sein, so dass der Querschnitt der Schiffchenform nach unten hin zunimmt, wie dies in Fig. 5 dargestellt ist.

Eine sichere Befestigung des oberen Randes der Behälterwand bzw. der Behälterfolie wird dadurch erreicht, dass oberhalb des obersten Schweißgrates 3 senkrechte Schweißgrate 9 auf den Flächen 7 nach außen hin vorstehend angeordnet sind, die bis zum oberen Rand der Fläche 7 reichen können.

Erreicht wird
- Reduzierung der Schweißtemperatur von 220°C auf 195°C, dadurch Verhinderung der Delamirlierungsgefahr der Folie
- Reduzierung der Schweißzeit von 1 sec auf 0,5 sec
- Konzentration der Schweißzone auf 2 bis 3 Rippen
- nur 1 Schweißprozess (heute bis zu 4)
- bessere Optik im Schweißbereich nach Verschweißung, schönere Schweißzone am fertigen Beutel.

## Patentansprüche

1. Kunststoff-Ausgieß-Einschweißteil (1) zum Verbinden mit einem Kunststoff-Behälterteil, insbesondere einem Behälterteil aus folienartigem Kunststoffmaterial wie einem Beutel, mit umfänglich eines eine Ausgießpassage definierenden Halsbereichs bzw. Stutzens sich erstreckenden zueinander parallelen flächenförmigen Anschweißrippen (2), an deren äußeren Umfang ein rippenförmiger Schweißgrat (3) mit einer geringeren Dicke als die der Anschweißrippen (2) vorgesehen ist, wobei der Schweißgrat (3) an einem äußeren abgerundeten Umfangsrand der Anschweißrippen angeformt ist, und senkrecht zu den Anschweißrippen eine Trennwand (5) angeordnet ist, die zu beiden Seiten des Halsbereichs radial vorsteht, **dadurch gekennzeichnet, dass** beide Enden der Trennwand über die Enden des Rippenbasisbereichs hinaus zu seitlichen Fahnen (6) verlängert sind, dass die Schweißgrate (3) verlängert über beide Seiten der Fahnen verlaufen, und dass die seitlichen Fahnen (6) statt einer oberen und unteren äußeren Ecke jeweils eine Ausnehmung (6a) aufweisen.

2. Kunststoff-Ausgieß-Einschweißteil (1) zum Verbinden mit einem Kunststoff-Behälterteil, insbesondere einem Behälterteil aus folienartigem Kunststoffmaterial wie einem Beutel, mit einem eine Ausgießpassage definierenden Halsbereich bzw. Stutzen, an dessen unterem Bereich zwei sich nach außen entgegengesetzt wölbende konvexe Flächen (7) angeordnet insbesondere angeformt sind, an deren Außenseite mindestens ein rippenförmiger Schweißgrat (3) vorgesehen ist, **dadurch gekennzeichnet, dass** beide Enden der Flächen (7) zu seitlich vorstehende Fahnen verlängert sind, dass die Schweißgrate (3) verlängert über beide Seiten der Fahnen verlaufen und dass die seitlichen Fahnen (6) statt einer oberen und unteren äußeren Ecke jeweils eine Ausnehmung (6a) aufweisen.

3. Einschweißteil nach Anspruch 1, **dadurch gekennzeichnet, dass** der Schweißgrat (3) am äußeren Ende der Anschweißrippen (2) oder der Fläche (7) bogenförmig knickfrei zur Fahne (6) hin verlauft.

4. Einschweißteil nach Anspruch 1 oder 2, **dadurch gekennzeichnet, dass** der Schweißgrat (3) auf der Fahne (6) in seiner Höhe (H) sich verringernd ausläuft.

5. Einschweißteil nach einem der vorherigen Ansprüche, **dadurch gekennzeichnet, dass** der Schweißgrat (3) in seiner Höhe (H) vom Ende der Anschweißrippen (2) oder der Fläche (7) zur Mitte der Anschweißrippe/der Fläche (7) hin abnimmt.

6. Einschweißteil nach Anspruch 4, **dadurch gekennzeichnet, dass** der Schweißgrat (3) im mittleren Bereich des Einschweißteils (1) die Höhe (H) Null hat.

7. Einschweißteil nach einem der Ansprüche 2 bis 4, **dadurch gekennzeichnet, dass** die Höhe des Schweißgrates (3) über seine Länge gleich groß ist

8. Einschweißteil nach einem der vorherigen Ansprüche, **dadurch gekennzeichnet, dass** mindestens vier Anschweißrippen (2) angeordnet sind und nur die mittleren Anschweißrippen Schweißgrate (3) aufweisen.

9. Einschweißteil nach einem der vorherigen Ansprüche, **dadurch gekennzeichnet, dass** die Fahnen (6) nur im Bereich derjenigen Anschweißrippen (2) vorstehen, die Schweißgrate (3) besitzen.

10. Einschweißteil nach einem der Ansprüche 2 bis 9, **dadurch gekennzeichnet, dass** die Höhe (F) der seitlichen Fahnen (6) geringer ist, als die Höhe (9) der Flächen (7).

11. Einschweißteil nach einem der Ansprüche 2 bis 10, **dadurch gekennzeichnet, dass** die Fahnen (6) mittig der Flächen (7) angeordnet sind.

12. Einschweißteil nach einem der vorherigen Ansprüche, **dadurch gekennzeichnet, dass** über die Fahnen (6) ein bis drei Schweißgrate (3) verlaufen.

13. Einschweißteil nach einem der vorherigen Ansprüche, **dadurch gekennzeichnet, dass** die Schweißgrate (3) einen gewölbten, spitzen, trapezförmigen oder rechteckigen Querschnitt aufweisen.

14. Einschweißteil nach einem der vorherigen Ansprüche, **dadurch gekennzeichnet, dass** weiter unten liegende Schweißgrate (3) einen größeren Querschnitt und/oder Höhe (H) aufweisen als darüber angeordnete Schweißgrate (3).

15. Einschweißteil nach einem der Ansprüche 2 bis 14, **dadurch gekennzeichnet, dass** es in seinem insbesondere durch die Halsbereich- bzw. Stutzenachse verlaufenden Querschnitt nach unten hin in seiner Breite zunimmt.

16. Einschweißteil nach Anspruch 15, **dadurch gekennzeichnet, dass** die Flächen (7) nach unten hin nach außen ausgestellt sind.

17. Einschweißteil nach einem der Ansprüche 2 bis 9, **dadurch gekennzeichnet, dass** die Flächen (7) in ihrem oberen Bereich zur Halsbereich- bzw. Stutzenachse parallele Schweißgrate (9) aufweisen.

## Claims

1. Plastic welding spout (1) for connection to a plastic container section, particularly a container section made from sheet-type plastic such as a bag, with a peripheral neck area or nozzle that delineates a pouring opening, and with parallel laminar welded fins (2), on the outer periphery of which there is a fin type weld ridge (3) that is thinner than the welded fins (2), whereby the weld ridge (3) is formed on an outer rounded peripheral rim of the welded fins and a partition (5), which projects radially to both sides of the neck area, is disposed vertically in relation to the welded fins, **characterized in that** both ends of the partition extend, beyond the ends of the fin base area, into lateral vanes (6), **in that** the weld ridges (3) extend over the sides of the vanes, and **in that** the lateral vanes (6) have an indent (6a) instead of an upper and lower outer corner.

2. Plastic welding spout (1) for connection to a plastic container section, particularly a container section from sheet-type plastic such as a bag, with a neck area or nozzle that delineates a pouring opening, there being, in particular, on the lower area of the neck area or nozzle, two convex faces (7), which arch outwards in opposite directions, on the outside of which there is at least one weld ridge (3), **characterized in that** both ends of the partition extend, beyond the ends of the fin base area, into lateral vanes (6), **in that** the weld ridges (3) extend over the sides of the vanes, and **in that** the lateral vanes (6) have an indent (6a) instead of an upper and lower outer corner.

3. Part to be welded in, in accordance with claim 1, **characterized in that** the weld ridge (3) on the outer end of the welded fins (2) or the face (7) runs, in a curve without a break, to the vane (6).

4. Part to be welded in, in accordance with claims 1 or 2, **characterized in that** the weld ridge (3) runs, thinning in height (H), to the vane (6).

5. Part to be welded in, in accordance with the above claims, **characterized in that** the weld ridge (3) narrows in height (H) from the end of the welded fins (2) or the face (7) to the centre of the welded fin/face (7).

6. Part to be welded in, in accordance with claim 4, **characterized in that** the weld ridge (3) has zero height (H) in the central area of the part to be welded in (1).

7. Part to be welded in, in accordance with claim 4, **characterized in that** the height of the weld ridge (3) is the same over its whole length.

8. Part to be welded in, in accordance with the above claims, **characterized in that** at least four welded fins (2) are disposed and only the central welded fins have weld ridges (3).

9. Part to be welded in, in accordance with the above claims, **characterized in that** the vanes (6) only project in the area of those welded ribs (2) that have weld ridges (3).

10. Part to be welded in, in accordance with one of claims 2 to 9, **characterized in that** the height (V) of the lateral vanes (6) is less than the height (9) of the faces (7).

11. Part to be welded in, in accordance with one of claims 2 to 10, **characterized in that** the vanes (6) are disposed in the centre of the faces (7).

12. Part to be welded in, in accordance with the above claims, **characterized in that** one to three weld ridges (3) run over the vanes (6).

13. Part to be welded in, in accordance with the above claims, **characterized in that** the weld ridges (3) have an arched, tipped, trapezoid or quadrilateral cross-sectional form.

14. Part to be welded in, in accordance with the above claims, **characterized in that** the weld ridges (3) lying further below have a larger cross-section and/or height than weld ridges (3) above them.

15. Part to be welded in, in accordance with one of claims 2 to 14, **characterized in that** the width of its cross-sectional form increases downwards, particularly through the neck area or nozzle shaft.

16. Part to be welded in, in accordance with claim 15, **characterized in that** the faces (7) are set outwards, in a downward direction.

17. Part to be welded in, in accordance with one of claims 2 to 9, **characterized in that**, in their upper area, the faces (7) have weld ridges (9) that run parallel to the neck area or nozzle shaft.

## Revendications

1. Pièce verseuse à souder (1) en matière plastique à relier à une pièce de contenant en matière plastique, en particulier une pièce de contenant en matière plastique du genre en feuille telle qu'un sac, présentant des nervures à souder (2) en forme de surfaces parallèles les unes autres s'étendant de manière périphérique à une zone de col ou goulot définissant un canal verseur, sur le pourtour extérieur desquelles est prévue une arête de soudage (3) en forme de nervure avec une épaisseur inférieure à celle des nervures à souder (2), l'arête de soudage (3) étant formée sur un bord périphérique extérieur arrondi des nervures à souder, et une paroi de séparation (5), qui fait saillie radialement des deux côtés de la zone de col, étant disposée perpendiculairement aux nervures à souder, **caractérisée en ce que** les deux extrémités de la paroi de séparation sont prolongées au-delà des extrémités de la zone de base des nervures en des pattes latérales (6), que les arêtes de soudage (3) se prolongent sur les deux côtés des pattes, et que les pattes latérales (6) présentent à chaque fois un évidement (6a) au lieu d'un coin extérieur supérieur et inférieur.

2. Pièce verseuse à souder (1) en matière plastique à relier à une pièce de contenant en matière plastique, en particulier une pièce de contenant en matière plastique du genre en feuille telle qu'un sac, présentant une zone de col ou goulot définissant un canal verseur, sur la zone inférieure duquel sont disposées, en particulier formées, deux surfaces convexes (7) se voûtant vers l'extérieur de manière opposée, sur le côté extérieur desquelles est prévue au moins une arête de soudage (3) en forme de nervure, **caractérisée en ce que** les deux extrémités des surfaces sont prolongées en des pattes dépassant latéralement (6), que les arêtes de soudage (3) se prolongent sur les deux côtés des pattes, et que les pattes latérales (6) présentent chaque fois un évidement (6a) au lieu d'un coin extérieur supérieur et inférieur.

3. Pièce à souder selon la revendication 1, **caractérisée en ce que** l'arête de soudage (3) s'étend en forme d'arc sans cassure en direction de la patte (6) à l'extrémité extérieure des nervures à souder (2) ou de la surface (7).

4. Pièce à souder selon la revendication 1 ou 2, **caractérisée en ce que** l'arête de soudage (3) se termine sur la patte (6) en diminuant dans sa hauteur (H).

5. Pièce à souder selon l'une des revendications précédentes, **caractérisée en ce que** l'arête de soudage (3) décroît dans sa hauteur (H) de l'extrémité des nervures à souder (2) ou de la surface (7) vers le centre de la nervure à souder / la surface (7).

6. Pièce à souder selon la revendication 4, **caractérisée en ce que** l'arête de soudage (3) a la hauteur (H) nulle dans la zone centrale de la pièce à souder.

7. Pièce. à souder selon l'une des revendications 2 à 4, **caractérisée en ce que** la hauteur de l'arête de soudage (3) est identique sur sa longueur.

8. Pièce à souder selon l'une des revendications précédentes, **caractérisée en ce qu'**au moins quatre nervures à souder (2) sont disposées et que seules les nervures à souder médianes présentent des arêtes de soudage (3).

9. Pièce à souder selon l'une des revendications précédentes, **caractérisée en ce que** les pattes (6) ne font saillie que dans la zone des nervures à souder (2) qui présentent des arêtes de soudage (3).

10. Pièce à souder selon l'une des revendications 2 à 9, **caractérisée en ce que** la hauteur (F) des pattes latérales (6) est inférieure à la hauteur (9) des surfaces (7).

11. Pièce à souder selon l'une des revendications 2 à 10, **caractérisée en ce que** les pattes (6) sont disposées de manière centrée sur les surfaces (7).

12. Pièce à souder selon l'une des revendications précédentes, **caractérisée en ce qu'**une à trois arêtes de soudage (3) s'étendent sur les pattes.

13. Pièce à souder selon l'une des revendications précédentes, **caractérisée en ce que** les arêtes de soudage (3) présentent une section transversale en voûte, en pointe, trapézoïdale ou carrée.

14. Pièce à souder selon l'une des revendications précédentes, **caractérisée en ce que** des arêtes de soudage (3) situées plus en bas ont une section transversale et/ou une hauteur (H) supérieures à celles des arêtes de soudage (3) situées au-dessus.

15. Pièce à souder selon l'une des revendications 2 à 14, **caractérisée en ce qu'**elle augmente dans sa largeur vers le bas dans sa section s'étendant en particulier par l'axe de la zone de col ou goulot.

16. Pièce à souder selon la revendication 15, **caractérisée en ce que** les surfaces (7) sont exposées vers le bas vers l'extérieur.

17. Pièce à souder selon l'une des revendications 2 à 9, **caractérisée en ce que** les surfaces (7) présentent dans leur zone supérieure des arêtes de soudage parallèles à l'axe de col ou goulot.
